(19) Europäisches Patentamt / European Patent Office / Office européen des brevets

(11) **EP 3 034 327 A1**

(12) **EUROPEAN PATENT APPLICATION**

(43) Date of publication:
**22.06.2016 Bulletin 2016/25**

(51) Int Cl.:
**B60C 1/00** (2006.01)     **C08L 7/00** (2006.01)
**C08L 9/02** (2006.01)     **C08L 9/06** (2006.01)

(21) Application number: **15174775.5**

(22) Date of filing: **01.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.12.2014 CN 201410790657**

(71) Applicant: **Shandong Linglong Tyre Co. Ltd.**
**Shandong 265400 (CN)**

(72) Inventors:
• **Wang, Feng**
**Zhaoyuan City (CN)**
• **Liu, Feng**
**Jinan City (CN)**

• **Sun, Tao**
**Zhaoyuan City (CN)**
• **Wang, Junying**
**Zhaoyuan City (CN)**
• **Jiang, Kai**
**Zhaoyuan City (CN)**
• **Wang, Zhenling**
**Zhaoyuan City (CN)**
• **Li, Hao**
**Fuyang City (CN)**
• **Cong, Shouqing**
**Zhaoyuan City (CN)**

(74) Representative: **Hoffmann Eitle**
**Patent- und Rechtsanwälte PartmbB**
**Arabellastraße 30**
**81925 München (DE)**

(54) **OIL-PROOF RUBBER MATERIAL FOR THE TIRE TREAD AND ITS PREPARATION METHOD AND THE APPLICATION THEREOF**

(57) This invention relates to the technical field of tire. Specifically, the invention relates to oil-proof rubber material for the tire tread and its preparation method and the application thereof. This material is characterized in comprising the following components based on 100 parts by weight: 15-70 parts of natural cis-1, 4-polyisoprene rubber, 0-40 parts of styrene-butadiene copolymer and 15-45 parts of acrylonitrile-butadiene copolymer. The swelling index of the rubber material for tire provided by this invention is 17-25% and the bonding strength is 30-60 kN·m$^{-1}$, so as to effectively improve swelling resistance and bonding performance. This invention takes both bonding performance and swelling resistance into consideration for the rubber material of the tire tread, and can expand the application scope of rubber material for the tire and has a broadly promising application future.

**Description**

**Technical field**

This invention relates to the technical field of tire, especially to the technical field of bias OTR tire (of the road) tire. Specifically, the invention relates to oil-proof rubber material for the tire tread and its preparation method and the application thereof.

**Background art**

As a result of natural rubber (NR) having the best tear resistance and bonding performance and universal synthetic rubber (SR) having high pricking resistance, both NR and SR are widely used as crude rubber system in the tread of bias OTR tire.
The proportion of NR and SR in current rubber formulas for the tire tread is 10/90, which leads to the general oil-proof swelling property of the mixed rubber with swelling index of 30%. Oil-proof swelling property is measured by detecting the mass of the sample dried after immersing a given amount of sample in vegetable oil at certain temperature for certain time. The smaller reported value of the swelling index means better oil-proof swelling property.

**Summary of the invention**

The technical problem to be solved by this invention lies in that NR and SR are widely used in OTR tire tread to promote bonding performance and pricking resistance but lead to negative effect of bad oil-proof swelling property. Special -purposed synthetic rubber (SR) is widely used in the oil-proof parts in various industries for great oil-proof swelling property but bad bonding performance and low wear resistance restrict its large-scale application.
To be specific, against the deficiency of the existing technology, the invention provides the following technical solutions:

The invention provides an oil-proof rubber material for the tire tread, being characterized in comprising 100 parts by weight of main rubber ingredients which contain 15-70 parts by weight of natural cis-1, 4-polyisoprene rubber, 0-40 parts by weight of styrene-butadiene copolymer and 15-45 parts by weight of acrylonitrile-butadiene copolymer.

Preferably, in the above mentioned rubber material for the tire tread, the mass fraction of the styrene group in said styrene-butadiene copolymer is 23.5% and the mass fraction of the acrylonitrile group in said acrylonitrile-butadiene copolymer is 29.4%.
Preferably, in the above mentioned rubber material for the tire tread, said rubber material comprises compounding ingredients containing the following components:

Based on 100 parts by weight of the main rubber ingredients, said compounding ingredients include 60-70 parts by weight of carbon black as reinforcing agent, 2-7 parts by weight of antioxidant, 1.8-2.5 parts by weight of fatty acid, 3-4 parts by weight of zinc oxide, 1-1.8 parts by weight of sulfur and 1-3 parts by weight of accelerator.

Preferably, in the above mentioned rubber material for the tire tread, said antioxidant includes 0.8-1.2 parts by weight of antioxidant N-(1,3-dimethyl) butyl-N'-phenyl-p-phenylenediamine, 0.8-1.2 parts by weight of antioxidant poly(1,2-dihydro-2,2,4-trimethylquinoline) homopolymer, and 0.8-1.2 parts by weight of antioxidant microcrystalline wax.
Preferably, in the above mentioned rubber material for the tire tread, said compounding ingredients include 5-7 parts by weight of aromatic oil.
Preferably, in the above mentioned rubber material for the tire tread, said main rubber ingredients comprise 30-45 parts by weight of natural cis-1, 4-polyisoprene rubber, 30-40 parts by weight of styrene-butadiene copolymer and 15-30 parts by weight of acrylonitrile-butadiene copolymer.
Preferably, in the above mentioned rubber material for the tire tread, said main rubber ingredients comprise 45 parts by weight of natural cis-1, 4-polyisoprene rubber, 40 parts by weight of styrene-butadiene copolymer and 15 parts by weight of acrylonitrile-butadiene copolymer.
Preferably, in the above mentioned rubber material for the tire tread, said main rubber ingredients comprise 30 parts by weight of natural cis-1, 4-polyisoprene rubber, 40 parts by weight of styrene-butadiene copolymer and 30 parts by weight of acrylonitrile-butadiene copolymer.
Preferably, in the above mentioned rubber material for the tire tread, said main rubber ingredients comprise 65-75 parts by weight of natural cis-1, 4-polyisoprene rubber and 25-35 parts by weight of acrylonitrile-butadiene copolymer.

Preferably, in the above mentioned rubber material for the tire tread, said main rubber ingredients comprise 70 parts by weight of natural cis-1, 4-polyisoprene rubber and 30 parts by weight of acrylonitrile-butadiene copolymer.

Preferably, in the above mentioned rubber material for the tire tread, the swelling index of said rubber material for the tire tread is 14-25%, the bonding strength of the rubber material is 20-60 kN·m$^{-1}$.

Preferably, in the above mentioned rubber material for the tire tread, the swelling index of said rubber material for the tire tread is 17-25%, the bonding strength of the rubber material is 30-60 kN·m$^{-1}$.

Preferably, in the above mentioned rubber material for the tire tread, the glass transition temperature of the rubber material is -50~-20°C

Preferably, the above mentioned rubber material is used for rubber material for bias OTR tire tread.

The invention further provides a method of preparing the above mentioned rubber material for the tire tread, which comprises the following steps:

(1) non production milling step: milling said rubber material for the tire tread for about 2-3min until the temperature of the rubber material reaches 150-165 °C;

(2) production milling step: adding sulfur into the rubber material obtained in step (1), and then milling the rubber material until the temperature of the rubber material reaches 100-120°C.

The invention further provides a tire tread, which is prepared from the above mentioned rubber material.

Preferably, the above mentioned tire tread is bias OTR tire tread.

The invention further provides a tire, which is prepared from the above mentioned tire tread.

The invention further provides the use of the above mentioned rubber material for the tire tread, the above mentioned tire tread or the above mentioned tire in the tire field.

The invention further provides the use of the above mentioned rubber material for the tire tread, the above mentioned tire tread or the above mentioned tire in the bias OTR tire field.

The swelling index of the rubber material for the tire tread provided by this invention is 17-25% and the bonding strength is 30-60 kN·m$^{-1}$, indicating that the tire tread obtains improved swelling resistance and bonding performance obviously. The invention can expand the application scope of rubber material for tire tread and has a promising application future for taking both bonding performance and swelling resistance into consideration.

**Embodiment**

This invention relates to OTR tire tread containing bias OTR tire which comprises 0-50phr natural cis-1,4-polyisoprene rubber, 0-50 phr general-purposed synthetic rubber of styrene-butadiene copolymer and 0-50 phr special-purposed synthetic rubber of acrylonitrile-butadiene copolymer. Said tread comprises the following components: a cis-1,4-polyisoprene rubber, a general-purposed synthetic rubber of styrene-butadiene copolymer with 23.5wt% styrene group, and a special-purposed synthetic rubber of acrylonitrile-butadiene copolymer with 29.4wt% acrylonitrile group.

The milling of rubber composition can be carried out through the methods known by the person skilled in the rubber milling filed. For example, under normal conditions, the components are milled in at least two stages, i.e., at least one non-production milling stage, followed by one production milling stage. Rubber and polymer resin are milled in one or more non-production milling stage.

Preferably, in the present invention, the rubber used as base material is natural cis-1,4-polyisoprene rubber, general-purposed synthetic rubber of styrene-butadiene copolymer, and special-purposed synthetic rubber of acrylonitrile-butadiene copolymer. There is 23.5wt% of styrene group in the styrene-butadiene copolymer. There is 29.4wt% acrylonitrile group in the acrylonitrile-butadiene copolymer.

The use of natural cis-1,4-polyisoprene rubber and styrene-butadiene copolymer, together with the special reinforced organic filler is considered important for improving the anti-cutting ability and the tear resistant of the tire.

acrylonitrile-butadiene copolymer is generally considered favorable for improving the oil-proof swelling property.

The rubber material for the tire tread and the preparation method thereof in the present invention are further illustrated in the following text based on the embodiments.

In the examples below, the agent information is shown as follows:

Cis-1,4-polyisoprene rubber: Manufacturer: Shanghai Jinshan Petrochemical Co., Ltd.; Purity: 99%.

Styrene-butadiene copolymer: Type: SBR 1502; Manufacturer: Sinopec Qilu Petrochemical Company; Styrene group content of 23.5wt%.

Acrylonitrile-butadiene copolymer: Type: NBR-2707; Manufacturer: Lanzhou petrochemical company; acrylonitrile group content of 29.4%.

Carbon black N220: Manufacturer: Fushun Carbon black Plant.

Aromatic Oil: Mode: TDAE; Manufacturer: Hansen & Rosenthal Chemical Co., Ltd.

Antioxidant 4020: Chemical Name: N-(1,3-dimethyl) butyl-N'-phenyl-p-phenylenediamine, Manufacturer: Jiangsu sinorchem Technology Co., Ltd.

Antioxidant RD: Chemical Name: 1,2-dihydro-2,2,4-trimethyl quinolines homopolymer. Manufacturer: Shandong Ekesen Chemical Co., Ltd.

Antioxidant microcrystalline wax: Mode: microcrystalline wax 654. Drop melting point(°C): 65 °C. Oil content (wt%): 3%. Chromatic number: 1. Penetration (1/10mm): 2mm. Manufacturer: German Rhein Chemie Corp.

Stearic acid: Manufacturer: Jiangsu Rugao Chemical Co., Ltd.

Zinc oxide: AR, Qingdao Haiyan Chemical Co., Ltd.

Sulfur: AR, Shandong Linyi Hubin Chemical Co., Ltd.

Accelerator: Type: Accelerator NS, Chemical Name: N-tert-butylbenzothiazole-2-sulphenamide; Manufacturer: Shandong Yanggu Huatai Chemical Co., Ltd.

The instrument information used in the following examples are shown as follows:

BR Banbury milling machine,: Type: BR1600-GLT, Manufacturer: USA FARREL Company.

Universal testing machine: Type: JYW-67, Manufacturer: Shenzhen high-speed rail testing equipment Co., Ltd.

Differential Scanning Calorimeter: Type: DSC-60, Manufacturer: Shimadzu Corporation.

Gel permeation chromatography and laser light scattering instrument: Type: miniDAWN chromatographic system, laser light scattering instrument Optilab rEX detector; Manufacturer: the chromatographic system for the Shimadzu Corporation, laser light scattering and differential refractive index detector for USA Wyatt Technology Corporation.

**Example 1**

In the BR Banbury milling machine, the rubber composition was prepared based on the components specified in Table 1. The preparation process adopted two separate feeding and milling stages, i.e., a non production milling stage and a production milling stage. The rubber material was milled in the non production stage for about 2-3min until the temperature of the rubber material reached 160°C. The milling time of the production stage was set to make the rubber material temperature reach 115°C. The specific process is shown as follows:

The main rubber ingredients (cis-1,4-polyisoprene rubber, styrene-butadiene copolymer and acrylonitrile-butadiene copolymer), carbon black N220 as reinforcing agent, filling oil of aromatic oil, antioxidants (antioxidant 4020, antioxidant RD, antioxidant microcrystalline wax), stearic acid as fatty acid and zinc oxide were milled in the non production milling stage for 2-3min, until the temperature of the rubber material reached 160°C; then sulfur and accelerator were added into the rubber material to carry out the production milling stage until the temperature of the rubber material reached 115°C. All samples were vulcanized at about 151°C for 30min.

The rubber compositions here were called as sample 1, sample 2, sample 3 and sample 4. Sample 1 here was used as control sample, i.e, the optimization ratio of rubber ingredients was not used in the rubber compositon thereof.

Table 1 The addition amount of raw materials in Example 1 (unit: kg)

| sample | control sample 1 | sample 2 | sample 3 | sample 4 |
|---|---|---|---|---|
| Cis-1,4-polyisoprene rubber | 10.0 | 30.0 | 70.0 | 45.0 |
| Styrene-butadiene copolymer | 90.0 | 40.0 | | 40.0 |
| acrylonitrile-butadiene copolymer | | 30.0 | 30.0 | 15.0 |
| Carbon black N220 | 65.0 | 65.0 | 65.0 | 65.0 |
| aromatic oil | 6.0 | 6.0 | 6.0 | 6.0 |
| Antioxidant 4020 | 1.0 | 1.0 | 1.0 | 1.0 |
| Antioxidant RD | 1.0 | 1.0 | 1.0 | 1.0 |
| Antioxidant microcrystalline wax | 1.0 | 1.0 | 1.0 | 1.0 |
| Stearic acid | 2.0 | 2.0 | 2.0 | 2.0 |
| Zinc oxide | 3.5 | 3.5 | 3.5 | 3.5 |
| Sulfur | 1.4 | 1.4 | 1.4 | 1.4 |
| Accelerator | 2.0 | 2.0 | 2.0 | 2.0 |

The weight-average molecular weight of the copolymers i.e, sample 2, sample 3 and sample 4 in the Example were determined as 640000-690000 by Gel permeation chromatography and laser light scattering instrument, with mixture of 50mM $NaH_2PO_4$ solution and methanol (70:30% (v/v)) as the mobile phase, and PEG 10000 as standard.

The swelling index and bonding strength of each sample were tested. Specific methods were shown as follows:

Test method for swelling index according to Chinese standard of HG/T 3870-2008 was used to detect the swelling index of samples. Specific method comprises the following steps: 45 mg sample was added into a frosted glass bottle with a stopper containing 50 mL toluene solvent. Thus the sample was immersed in toluene, then placed in water bath of 30°C for 4 hours. The sample was removed from the bottle and left to dry off, then weighted and tested. The calculation formula of swelling index is as follows:

$$S=(M_2-M_0)/M_1$$

In which,
S is the swelling index;
$M_1$ is the weight of sample before swelling, unit: g;
$M_2$ is the total weight of weighing bottle and sample after swelling, unit: g;
$M_0$ is the weight of weighing bottle, unit: g.

The smaller swelling index means higher oil-proof swelling property of the product.

The test method of the bonding strength is as follows: according to Chinese standard of GB/T 7760-2003: *Determination Method of Bonding Strength Of Vulcanized Or Thermoplastic Rubber To Rigid Plates(90 ° Peel Method)* was used to detect the peel strength of samples. Specific method was as follows: install the sample on the special jig of universal testing machine, start the tensile testing machine in drawing speed of $50 \pm 5$ mm/min until the sample was completely separated. Record the biggest release force, and calculate the peel bonding strength based on the following equation. The result was represented by the average value of four samples.

$$\sigma=F/b$$

In which, σ is the peel bonding strength, unit: kN/m;
F is the biggest release force, unit: N;
b is the width of sample, unit: mm.

The higher reporting value means the higher bonding property.

Table 2 The property of each samples in Example 1

| 151°C*30min vulcanization | sample 1 | sample 2 | sample 3 | sample 4 |
|---|---|---|---|---|
| swelling index/% | 30.0 | 17.0 | 22.0 | 25.0 |
| bonding strength/kN·m$^{-1}$ | 26.0 | 32.0 | 60.0 | 38.0 |

The test result of Example 1 shown in table 2 indicated that with aromatic oil as filling oil, after adding acrylonitrile-butadiene copolymer, the swelling index of sample 3 can reach 22.0%, which significantly decreased comparing with Comparative Examples 1. The bonding strength of sample 3 can reach 60kN·m$^{-1}$ which obviously increased comparing with Comparative Examples 1. After adding styrene-butadiene copolymer, the swelling index of sample 2 and sample 4 reduced to 17.0% and 25% respectively. Under the condition of same styrene-butadiene copolymer content, the swelling index and bonding strength increased with the decrease of acrylonitrile-butadiene copolymer proportion. So the oil proof swelling property and bonding performance of product can be effectively improved by adding acrylonitrile-butadiene copolymer to original natural rubber. The oil proof welling property and bonding performance of product can be improved by adding acrylonitrile-butadiene copolymer and styrene-butadiene copolymer to original natural rubber. Meanwhile, the bonding strength increased with the decrease of acrylonitrile-butadiene copolymer content.

**Example 2**

In the BR Banbury miling machine, the rubber composition was prepared based on the components specified in Table 3. The preparation process adopted two separate feeding and milling stages, i.e., a non production milling stage and a production milling stage. The rubber material was milled in the non production stage for about 2-3min until the temperature of the rubber material reached 160°C. The milling time of the production stage was set to make the temperature of rubber material reach 115 °C. The specific process is shown as follows:

The main rubber ingredients (cis-1,4-polyisoprene rubber, styrene-butadiene copolymer and acrylonitrile-butadiene copolymer), carbon black N220 as reinforcing agent, antioxidants (antioxidant 4020, antioxidant RD, antioxidant microcrystalline wax), stearic acid as fatty acid and zinc oxide were milled in the non production milling stage for 2-3min, until the temperature of the rubber material reached 160°C; then sulfur and accelerator were added into the rubber material to carry out the production milling stage until the temperature of the rubber material reached 115 °C. All samples were vulcanized at about 151 °C for 30min.

The rubber compositions here were called as sample a, sample b, sample c and sample d. Sample a here was used as control sample, i.e, the optimization ratio of filling material ingredients was not used in the filling material system.

All samples were vulcanized at about 151°C for about 30min. Appearance and physical properties of the vulcanized samples a to d were shown in table 4.

Table 3 The addition amount of raw materials in Example 2 (unit: kg)

| Sample | control sample a | sample b | sample c | sample d |
|---|---|---|---|---|
| Cis-1,4-polyisoprene rubber | 10.0 | 45.0 | 30.0 | 15.0 |
| Styrene-butadiene copolymer | 90.0 | 40.0 | 40.0 | 40.0 |
| acrylonitrile-butadiene copolymer | | 15.0 | 30.0 | 45.0 |
| Carbon black N220 | 65.0 | 65.0 | 65.0 | 65.0 |
| Antioxidant 4020 | 1.0 | 1.0 | 1.0 | 1.0 |
| Antioxidant RD | 1.0 | 1.0 | 1.0 | 1.0 |
| Antioxidant microcrystalline wax | 1.0 | 1.0 | 1.0 | 1.0 |
| Stearic acid | 2.0 | 2.0 | 2.0 | 2.0 |
| Zinc oxide | 3.5 | 3.5 | 3.5 | 3.5 |
| Sulfur | 1.4 | 1.4 | 1.4 | 1.4 |
| Accelerator | 2.0 | 2.0 | 2.0 | 2.0 |

Table 4 The property of samples in Example 2

| 151°C*30min vulcanization | sample a | sample b | sample c | sample d |
|---|---|---|---|---|
| swelling index/% | 30.0 | 25.0 | 17.0 | 14.0 |
| bonding strength/KN · m$^{-1}$ | 24.0 | 35.0 | 30.0 | 20.0 |

The weight-average molecular weight of the sample b, c, and d in the Example 2 were determined as 670000-710000 respectively by using the method of Example 1.

The swelling index and bonding strength of the examples were tested by the same method as example 1. The results shown in table 4 indicated that under the condition of same styrene-butadiene copolymer content, the swelling index of the product gradually decreased to 14-25% with the increasing proportion of acrylonitrile-butadiene copolymer and the decreasing proportion of cis-1,4-polyisoprene rubber, meanwhile, the bonding strength of the product gradually decreased. The bonding strength of sample b and c can reach 30-35 kN·m$^{-1}$ when the amount of acrylonitrile-butadiene copolymer is 15-30 parts by weight. After adding acrylonitrile-butadiene copolymer, the swelling index of rubber material prepared in this invention significantly decreased and the bonding strength of rubber material significantly increased comparing with sample a, so the oil-proof swelling property and bonding performance of product prepared in this invention can be improved dramatically. It is indicated by comparing sample b with sample 4 and comparing sample c and sample 2 respectively that the bonding strength of rubber material can be effectively improved by adding 5-7 parts by weight of aromatic oil.

Test method for glass transition temperature: the glass transition temperature of each sample in Example 1 and 2 were detected by means of differential scanning calorimetry. Test conditions were set as air atmosphere, heating rate of 20°C /min, test temperature range of room temperature ~800°C. The test results indicated that samples 2, 3, 4, b, c, d were random copolymers, the glass transition temperatures of which were between (-50) to (-20) °C.

The bonding strength of product in this invention can also be detected according to the method for testing peel strength which is acceptable in tire industry. The higher reported value means higher bonding property.

In the present invention, the rubber used as base material is composition of natural cis-1,4-polyisoprene rubber, general-purposed synthetic rubber of styrene-butadiene copolymer, and special-purposed synthetic rubber of acrylonitrile-butadiene copolymer. There is 23.5wt% of styrene group in the styrene-butadiene copolymer. There is 29.4wt% of acrylonitrile group in the acrylonitrile-butadiene copolymer.

The above mentioned results indicate that the oil proof swelling property and bonding performance of tire tread can be significantly improved by using cis-1,4-polyisoprene rubbe, styrene-butadiene copolymer and acrylonitrile-butadiene copolymer as the ingredients of the rubber material. The rubber material for the tire tread prepared in this invention can expand its application scope and have a promising future of application for taking both bonding performance and swelling resistance into consideration.

**Claims**

1. An oil-proof rubber material for the tire tread is **characterized in** comprising 100 parts by weight of main rubber ingredients which contains 15-70 parts by weight of natural cis-1,4-polyisoprene rubber, 0-40 parts by weight of styrene-butadiene copolymer and 15-45 parts by weight of acrylonitrile-butadiene copolymer.

2. The rubber material for the tire tread according to claim 1, wherein, the mass fraction of the styrene group in said styrene-butadiene copolymer is 23.5% and the mass fraction of the acrylonitrile group in the said acrylonitrile-butadiene copolymer is 29.4%.

3. The rubber material for the tire tread according to claim 2, wherein, said rubber material comprises compounding ingredients contain the following components:

   Based on 100 parts by weight of the main rubber ingredients, the said compounding ingredients include 60-70 parts by weight of carbon black as reinforcing agent, 2-7 parts by weight of antioxidant, 1.8-2.5 parts by weight of fatty acid, 3-4 parts by weight of zinc oxide, 1-1.8 parts by weight of sulfur and 1-3 parts by weight of accelerator.

4. The rubber material for the tire tread according to claim 3, wherein, said antioxidant includes 0.8-1.2 parts by weight of antioxidant N-(1,3-dimethyl) butyl-N'-phenyl-p-phenylenediamine, 0.8-1.2 parts by weight of antioxidant poly(1,2-dihydro-2,2,4-trimethylquinoline) homopolymer, and 0.8-1.2 parts by weight of antioxidant microcrystalline wax.

5. The rubber material for the tire tread according to claim 4, wherein, said compounding ingredients include 5-7 parts by weight of aromatic oil.

6. The rubber material for the tire tread according to claim 4, wherein, said main rubber ingredients comprise 30-45 parts by weight of natural cis-1, 4-polyisoprene rubber, 30-40 parts by weight of styrene-butadiene copolymer and 15-30 parts by weight of acrylonitrile-butadiene copolymer.

7. The rubber material for the tire tread according to claim 5, wherein, said main rubber ingredients comprise 30-45 parts by weight of natural cis-1, 4-polyisoprene rubber, 30-40 parts by weight of styrene-butadiene copolymer and 15-30 parts by weight of acrylonitrile-butadiene copolymer.

8. The rubber material for the tire tread according to claim 6, wherein, said main rubber ingredients comprise 45 parts by weight of natural cis-1, 4-polyisoprene rubber, 40 parts by weight of styrene-butadiene copolymer and 15 parts by weight of acrylonitrile-butadiene copolymer.

9. The rubber material for the tire tread according to claim 7, wherein, said main rubber ingredients comprise 45 parts by weight of natural cis-1, 4-polyisoprene rubber, 40 parts by weight of styrene-butadiene copolymer and 15 parts by weight of acrylonitrile-butadiene copolymer.

10. The rubber material for the tire tread according to claim 6, wherein, said main rubber ingredients comprise 30 parts by weight of natural cis-1, 4-polyisoprene rubber, 40 parts by weight of styrene-butadiene copolymer and 30 parts by weight of acrylonitrile-butadiene copolymer.

11. The rubber material for the tire tread according to claim 7, wherein, said main rubber ingredients comprise 30 parts by weight of natural cis-1, 4-polyisoprene rubber, 40 parts by weight of styrene-butadiene copolymer and 30 parts by weight of acrylonitrile-butadiene copolymer.

12. The rubber material for the tire tread according to claim 5, wherein, said main rubber ingredients comprise 65-75 parts by weight of natural cis-1, 4-polyisoprene rubber and 25-35 parts by weight of acrylonitrile-butadiene copolymer.

13. The rubber material for the tire tread according to claim 12, wherein, said main rubber ingredients comprise 70 parts by weight of natural cis-1, 4-polyisoprene rubber and 30 parts by weight of acrylonitrile-butadiene copolymer.

14. A method of preparing the rubber material for the tire tread according to any one of claims 1 to 13, comprising the following steps:

(1) non production milling step: milling said rubber material for the tire tread for about 2-3min until the temperature of the rubber material reaches 150-165°C;
(2) production milling step: adding sulfur into the rubber material obtained in step (1), and then milling the rubber material until the temperature of the rubber material reaches 100-120°C.

15. A tire tread, which is prepared using said rubber material for the tire tread according to any one of claims 1 to 13.

Europäisches
Patentamt

European
Patent Office

Office européen
des brevets

**EUROPEAN SEARCH REPORT**

Application Number

EP 15 17 4775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 447 316 A1 (GOODYEAR TIRE & RUBBER [US]) 2 May 2012 (2012-05-02)<br>* abstract *<br>* table 1 *<br>----- | 1<br><br>2-15 | INV.<br>B60C1/00<br>C08L7/00<br>C08L9/02<br>C08L9/06 |
| X<br>A | EP 0 943 656 A1 (YOKOHAMA RUBBER CO LTD [JP]) 22 September 1999 (1999-09-22)<br>* abstract *<br>* claims 1,6; examples 1-8; table 1 *<br>----- | 1<br><br>2-15 | |
| X<br>A | EP 0 173 546 A2 (JAPAN SYNTHETIC RUBBER CO LTD [JP]) 5 March 1986 (1986-03-05)<br>* abstract *<br>* page 4, line 13 - line 15; claims 1,2 *<br>----- | 1<br><br>2-15 | |
| X | US 2008/149245 A1 (THIELEN GEORGES MARCEL VICTOR [LU] ET AL)<br>26 June 2008 (2008-06-26)<br>* abstract *<br>* paragraph [0002] - paragraph [0015] *<br>* paragraph [0026] *<br>* paragraph [0028] - paragraph [0031] *<br>* paragraph [0036] *<br>* paragraph [0045] *<br>* paragraph [0072] *<br>* paragraph [0078] - paragraph [0080] *<br>* paragraph [0083] *<br>* paragraph [0085]; table 1 *<br>----- | 1-15 | |
| | | | **TECHNICAL FIELDS SEARCHED (IPC)**<br><br>B60C<br>C08L<br>C08K |
| A | EP 0 491 229 A1 (BRIDGESTONE CORP [JP]) 24 June 1992 (1992-06-24)<br>* abstract *<br>* page 2, line 1 - line 25 *<br>* page 3, line 5 - page 4, line 54 *<br>* page 11, line 55 - page 12, line 54; example 7; table III *<br>* page 14, line 54 - page 15, line 17 *<br>* page 16, line 3 - page 17, line 35; example I; table VII *<br>----- | 1-15 | |

The present search report has been drawn up for all claims

| Place of search | Date of completion of the search | Examiner |
|---|---|---|
| Munich | 8 December 2015 | Laïb, Samia |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

 

& : member of the same patent family, corresponding
　document

EPO FORM 1503 03.82 (P04C01)

## ANNEX TO THE EUROPEAN SEARCH REPORT
## ON EUROPEAN PATENT APPLICATION NO.

EP 15 17 4775

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2015

| Patent document cited in search report | | Publication date | Patent family member(s) | | Publication date |
|---|---|---|---|---|---|
| EP 2447316 | A1 | 02-05-2012 | BR | PI1105280 A2 | 28-07-2015 |
| | | | CN | 102463845 A | 23-05-2012 |
| | | | EP | 2447316 A1 | 02-05-2012 |
| | | | JP | 2012096786 A | 24-05-2012 |
| | | | KR | 20120044900 A | 08-05-2012 |
| | | | US | 2012103496 A1 | 03-05-2012 |
| EP 0943656 | A1 | 22-09-1999 | EP | 0943656 A1 | 22-09-1999 |
| | | | EP | 2392620 A1 | 07-12-2011 |
| | | | US | 6397913 B1 | 04-06-2002 |
| | | | US | 2003062104 A1 | 03-04-2003 |
| | | | US | 2003062105 A1 | 03-04-2003 |
| | | | US | 2003062106 A1 | 03-04-2003 |
| | | | WO | 9916823 A1 | 08-04-1999 |
| EP 0173546 | A2 | 05-03-1986 | DE | 3580326 D1 | 06-12-1990 |
| | | | EP | 0173546 A2 | 05-03-1986 |
| | | | JP | H0475931 B2 | 02-12-1992 |
| | | | JP | S6153340 A | 17-03-1986 |
| | | | US | 4849478 A | 18-07-1989 |
| US 2008149245 | A1 | 26-06-2008 | EP | 1935926 A1 | 25-06-2008 |
| | | | US | 2008149245 A1 | 26-06-2008 |
| EP 0491229 | A1 | 24-06-1992 | CA | 2057848 A1 | 19-06-1992 |
| | | | DE | 69110020 D1 | 29-06-1995 |
| | | | DE | 69110020 T2 | 28-09-1995 |
| | | | EP | 0491229 A1 | 24-06-1992 |
| | | | ES | 2071896 T3 | 01-07-1995 |
| | | | JP | 3122507 B2 | 09-01-2001 |
| | | | JP | H04279641 A | 05-10-1992 |

EPO FORM P0459

For more details about this annex : see Official Journal of the European Patent Office, No. 12/82